# EUROPÄISCHE PATENTSCHRIFT

(11) **EP 3 140 156 B1**
(45) Veröffentlichungstag und Bekanntmachung des Hinweises auf die Patenterteilung: **10.07.2019**
(21) Anmeldenummer: 14721846.5
(22) Anmeldetag: 05.05.2014
(51) Int. Cl.: B60N 2/28

(54) **FANGELEMENT**
FRONT GUARD
BOUCLIER D'IMPACT

(43) Veröffentlichungstag der Anmeldung: 15.03.2017
(73) Patentinhaber: CYBEX GmbH, 95448 Bayreuth (DE)
(72) Erfinder: POS, Martin, 95444 Bayreuth (DE)
(74) Vertreter: Popp, Eugen
(86) Internationale Anmeldenummer: PCT/EP2014/059069
(87) Internationale Veröffentlichungsnummer: WO 2015/169330

(56) Entgegenhaltungen:
- EP-A1- 0 191 118
- DE-A1- 3 422 340
- DE-A1- 19 824 590
- DE-A1-102004 007 768
- DE-A1-102012 100 707
- GB-A- 1 598 398
- GB-A- 2 230 182
- US-A- 3 784 224

## Beschreibung

Die Erfindung betrifft ein Fangelement zum Halten eines Kindes mit einem Gurtsystem eines Fahrzeugs gemäß dem Oberbegriff des Anspruchs 1.

DE 10 2012 100 707 A1 zeigt einen Kindersitz für ein Kraftfahrzeug mit einem Fangkörper, der zum Halten eines Kindersitzes mit einem Gurtsystem zusammenwirken kann.

DE 198 24 590 A1 offenbart einen Kindersitz für Kraftfahrzeuge mit einem Fangtisch und einem Sicherheitsgurt.

EP 206 11 59 A1 zeigt ein Fangelement zum Halten eines Kindes mit einem Gurtsystem eines Fahrzeuges. Derartige Fangelemente sollen ein insbesondere in einem Kindersitz sitzendes Kind, im Falle eines Unfalls oder einer starken Bremsung, im Sitz halten. Fangkörpersysteme können auf dem Beifahrersitz oder der Rückbank zum Einsatz kommen und mit (konventionellen) 3-Punkt-Gurten zusammenwirken. Der Beckengurtabschnitt eines 3-Punkt-Gurtes verläuft hierbei üblicherweise in einer quer verlaufenden nutenförmigen Ausnehmung im Fangkörper, oder liegt an der Außenseite des Fangkörpers an.

Im Allgemeinen können derartige Fangelemente mit einem Kindersitz mit oder ohne Rückenlehne sowie mit oder ohne Seitenlehnen zum Einsatz kommen. Der Fangkörper kann auf den Oberschenkeln des Kindes und/oder auf dem Kindersitz aufliegen. Alternativ kann der Fangkörper auch auf einem Fahrzeugsitz abgestützt sein. Insbesondere bei größeren Kindern werden Fangelemente auch ohne zugehörigen Kindersitz eingesetzt. In diesem Fall sitzt das (schon ältere) Kind direkt auf dem Fahrzeugsitz und das Fangelement ist an diesem bzw. dem Fahrzeug befestigt.

Bei einer starken Bremsung oder gar einem Frontalaufprall des Fahrzeuges, wird der Oberkörper des Kindes auf die Oberfläche (Innenfläche) des Fangkörpers gedrängt. Daher ist dieser oft mit einer Schaum- oder Polsterungseinlage versehen, um Verletzungen zu vermeiden.

Wenn das Fangelement selbst an dem Kindersitz fixiert ist, kann dieser Kindersitz wiederum an einem Fahrzeugsitz bzw. dem Fahrzeug befestigt sein. Dazu ist im Stand der Technik der Sitz oftmals an einem Untersatz befestigt, der beispielsweise mit einer ISOFIX-Halterung versehen ist, die an ISOFIX-Befestigungspunkten an dem Sitz, nämlich an Querbolzen, befestigbar ist.

Ein grundsätzliches Problem bei den im Stand der Technik bekannten Fangelementen besteht darin, dass das Kind, beispielsweise im Falle eines Unfalls, eine vergleichsweise große Wegstrecke zurücklegt, bis es durch das Fangelement abgebremst ist. Im Extremfall kann sogar der Kopf des Kindes an einen Vordersitz oder an eine Armatur anschlagen.

Die Aufgabe der vorliegenden Erfindung ist es daher, ein Fangelement für ein Fahrzeug, insbesondere zur Verbindung mit einem Kindersitz zu schaffen, das auf konstruktiv einfache Weise das Kind besonders sicher im Kindersitz bzw. auf dem Fahrzeugsitz, insbesondere im Falle eines Überschlags eines Fahrzeugs, hält.

Die Aufgabe wird durch ein Fangelement mit den Merkmalen des Anspruchs 1 gelöst.

Das Fangelement dient zum Halten eines Kindes mit einem einen Diagonal-Gurtabschnitt und einen Horizontal-Gurtabschnitt umfassendes Gurtsystem eines Fahrzeugs, und ist insbesondere zur Verwendung mit einem Kindersitz ausgebildet, wobei sich das Fangelement etwa quer oberhalb der Oberschenkel eines auf einer Sitzfläche sitzenden Kindes erstreckt. Das Fangelement umfasst eine erste Gurtführung für den Diagonal-Gurtabschnitt, und der Horizontal-Gurtabschnitt wirkt mit einer zweiten Gurtführung zusammen, derart, dass sich der Horizontal-Gurtabschnitt unmittelbar über die Oberschenkel des Kindes hinweg erstreckt. Die zweite Gurtführung kann dabei entweder an dem Fangelement oder an einem Sitz, insbesondere an einem mit dem Fangelement zusammenwirkenden Kindersitz, angeordnet sein.

Ein wesentlicher Gedanke der vorliegenden Erfindung ist es daher, dass der Horizontal-Gurtabschnitt eines 3-Punkt-Gurtsystems, d.h. also der Beckengurt, in direktem Kontakt mit dem Kind steht. Dadurch wird bewirkt, dass das Kind bei einem Fahrzeugunfall, insbesondere mit Überschlag, besonders sicher im Sitz gehalten wird. Bei einer Vorwärtsbewegung des Oberkörpers des Kindes wird nämlich der Diagonal-Gurtabschnitt des Gurtes gestrafft. Der nach vorne bewegte Diagonal-Gurtabschnitt zieht über eine Gurtumlenkung im Anschlussbereich des Gurtes am Fahrzeug den Horizontal-Gurtabschnitt nach. Dadurch wird der Horizontal-Gurtabschnitt (Beckengurt) nach unten in Richtung Sitzfläche gezogen. Dementsprechend wird eine Straffung des Diagonal-Gurtabschnittes über die Gurtumlenkung bewirkt, wenn der Horizontal-Gurtabschnitt bei einem Fahrzeugüberschlag durch eine Bewegung des Kindes in Richtung Fahrzeughimmel bewegt wird. Das Kind wird also in jedem Fall sicher auf der Sitzfläche bzw. an der Rückenstützfläche fixiert, indem der Horizontal-Gurtabschnitt unmittelbar auf dem Kind aufliegt und eine Gurtstraffung damit direkt auf das Kind wirkt. Insgesamt wird durch die Erfindung eine sichere Fixierung des Beckens des Kindes bewirkt, wenn der Oberkörper einen Zug auf den Diagonal-Gurtabschnitt oder die Oberschenkel einen Zug auf den Horizontal-Gurtabschnitt ausüben. Das Fangelement gemäß der vorliegenden Erfindung sorgt somit für eine erhöhte Kinder-Sicherheit im Falle eines Fahrzeugunfalls und insbesondere im Falle eines Überschlags.

Die erste und/oder die zweite Gurtführung können als schlitzartige Öffnungen ausgebildet sein. Die erste Gurtführung kann an der Vorderseite des Fangelements angeordnet sein. Die zweite Gurtführung kann zwei jeweils zu beiden Seiten des Fangelements angeordnete Führungsabschnitte umfassen, zwischen denen der Horizontal-Gurtabschnitt frei führbar ist. Die zwei Führungsabschnitte der zweiten Gurtführung können vorzugsweise als seitliche Aussparungen in dem Fangelement vorgesehen sein. Die zweite Gurtabschnittsführung bzw. deren Führungsabschnitte sind vorzugsweise in einem (vertikalen) Abstand zu der ersten Gurtführung an einer Unterseite des Fangelements angeordnet. Auf diese Weise wird sichergestellt, dass der Horizontal-Gurtabschnitt im Benutzungszustand des Fangelements unmittelbar auf dem Kind und insbesondere auf dessen Oberschenkeln aufliegt.

Die erste Gurtführung und die zweite Gurtführung sind vorzugsweise so zueinander ausgerichtet, dass eine im Wesentlichen senkrecht zueinander ausgerichtete Führung des Diagonal-Gurtabschnitts und des Horizontal-Gurtabschnitts bewirkt wird. Auf diese Weise wird die bestmögliche Rückhaltefunktion des Fangelements erzeugt. Die vorzugsweise schlitzartig ausgebildete zweite Gurtführung ist im Benutzungszustand des Fangelements vorzugsweise im Wesentlichen parallel zu den Oberschenkeln des Kindes ausgerichtet. Auf diese Weise verläuft auch der Horizontal-Gurtabschnitt im Wesentlichen parallel zu den Oberschenkeln des Kindes, so dass eine optimale Rückhaltewirkung durch den Gurt im Falle eines Unfalls erreicht wird. Die zweite Gurtführung zur Aufnahme des Horizontal-Gurtabschnitts ist zur Vorderseite des Fangelements hin vorzugsweise offen. Dadurch kann der Horizontal-Gurtabschnitt besonders einfach mit dem Fangelement und insbesondere mit der ersten Gurtführung in Eingriff gelangen.

Besonders vorteilhaft ist eine erste Gurtführung, die sich zwischen den beiden Seitenflächen des Fangelements erstreckt und einen im Wesentlichen bogenförmigen Verlauf aufweist. Auf diese Weise kann sowohl bei einer linksseitigen als auch bei einer rechtsseitigen Positionierung des Fangelements im Kraftfahrzeug eine optimale, möglichst diagonale bzw. schräge Führung des Diagonal-Gurtabschnitts erzielt werden. Die Rückhaltewirkung des Diagonal-Gurtabschnitts kann dadurch noch verbessert werden.

Besonders vorteilhaft ist es, wenn das Fangelement relativ zu der Sitzfläche, insbesondere zu der Sitzfläche eines Kindersitzes, verstellbar gelagert ist. Vorzugsweise ist das Fangelement in einem von hinten nach vorne ansteigenden Winkel möglich. Das Fangelement kann ferner stufenlos, oder alternativ stufenweise verstellt werden.

Um im Falle eines Unfalls das Verletzungsrisiko des Kindes soweit wie möglich zu reduzieren, kann das Fangelement ein der Brust des Kindes zugewandtes Polster umfassen, welches einen Brustauflagebereich definiert. Ferner kann das Fangelement einen Hohlkörper mit einem etwa U-förmigen Querschnitt umfassen, der in montierter Stellung in Richtung nach vorne hin offen ist und die schlitzartige erste Gurtführung definiert.

Vorzugsweise schließt die Unterseite des Fangelements bei einer vorteilhaften Weiterbildung der Erfindung einen spitzen Winkel, d.h. einen Winkel <90°, mit einer dem Fangelement zugeordneten Rückenstützfläche ein. Insbesondere beträgt der Winkel etwa 60-85°, vorzugsweise 70-85°. Vorteilhafterweise entspricht der Winkel im montierten Zustand des Fangelements etwa der Neigung einer dem Fangelement zugeordneten Sitzfläche. Die Sitzfläche schließt also mit der zugeordneten Rückenstützfläche vorzugsweise ebenfalls einen spitzen Winkel ein. Die Sitzfläche und die Unterseite des Fangelements sind in dieser Ausführungsform im Benutzungszustand des Fangelements im Wesentlichen parallel zueinander ausgerichtet.

Die Erfindung wird im Folgenden anhand der Zeichnung näher erläutert. Es zeigen:
- Fig. 1: eine Seitenansicht des Fangelements gemäß der vorliegenden Erfindung;
- Fig. 2: eine perspektivische Darstellung eines mit einem Kindersitz zusammenwirkenden Fangelements gemäß der vorliegenden Erfindung, und
- Fig. 3: eine schematische Seitenansicht des Fangelements gemäß einer vorteilhaften Weiterbildung der Erfindung mit einer zugeordneten Sitzfläche.

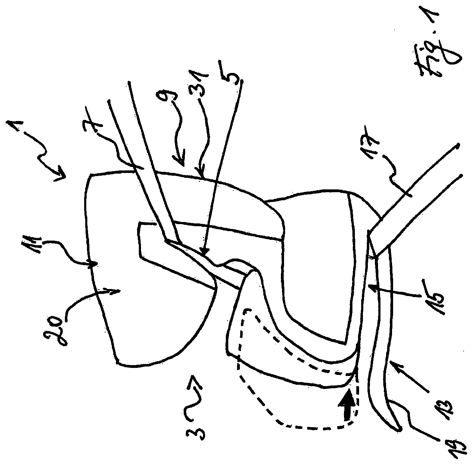

Fig. 1 zeigt eine schematische Seitendarstellung eines Fangelements 1 gemäß der Erfindung. Das Fangelement 1 umfasst vorzugsweise einen Hohl- oder Schaumkörper mit etwa U-förmigem Querschnitt, der an seiner Vorderseite 3, d.h. an der dem Kind abgewandten Seite, hin offen ist und eine erste Gurtführung 5 zur Aufnahme eines Diagonal-Gurtabschnittes 7, d.h. den Brustgurt, eines 3-Punkt-Gurtsystems aufnimmt und darin führt.

Wie aus Fig. 1 erkennbar ist, ist die erste Gurtführung 5 schlitzartig ausgebildet, so dass der Diagonal-Gurtabschnitt 7 einerseits einfach in die erste Gurtführung 5 eingeschoben werden kann und andererseits aber möglichst nicht darin verdreht werden kann.

Weiterhin ist erkennbar, dass eine Rückseite 9 des Fangelements 1, d.h. die dem Kind zugewandte Seite des Fangelements 1, und insbesondere auch eine Oberseite 11, die eine Armablagefläche für das Kind bildet, gepolstert ausgeführt sind.

Im Bereich einer im Benutzungszustand des Fangelements 1 den Oberschenkeln eines Kindes zugewandten Unterseite 13 weist das Fangelement 1 eine zweite Gurtführung 15 auf. Die zweite Gurtführung 15 dient zur Aufnahme eines Horizontal-Gurtabschnitts 17, d.h. eines Beckengurtes, eines 3-Punkt-Gurtsystems. Die zweite Gurtführung 15 muss nicht zwingend unmittelbar an dem Fangelement 1 angeordnet sein. Vielmehr ist es denkbar, die zweite Gurtführung 15 an einem dem Fangelement 1 zugeordneten Kindersitz o.dgl. anzuordnen.

Die zweite Gurtführung 15 ist im vorliegenden Ausführungsbeispiel ebenfalls im Wesentlichen schlitzförmig ausgebildet, so dass der Horizontal-Gurtabschnitt 17 einfach in die schlitzförmige zweite Gurtführung einführbar ist, darin aber möglichst nicht verdreht werden kann.

Die zweite Gurtführung 15 umfasst vorliegend zwei gegenüberliegende und in einem Abstand angeordnete Führungsabschnitte, von denen in der Fig. 1 lediglich ein Führungsabschnitt 19 erkennbar ist. Der Führungsabschnitt 19 ist einstückig mit dem übrigen Fangelement 1 ausgebildet und erstreckt entlang der Unterseite 13 des Fangelements 1 im Bereich einer Seitenfläche 20 des Fangelements 1. Die zweite Gurtführung 15 bzw. der Führungsabschnitt 19 ist zur Vorderseite 3 des Fangelements 1 hin offen, so dass ein Benutzer des Fangelements 1 den Horizontal-Gurtabschnitt 17 einfach einführen kann.

Fig. 1 macht noch deutlich, dass die Ausrichtung der schlitzförmigen ersten und zweiten Gurtführungen 5 und 15 derart ist, dass die Flächen der horizontalen und diagonalen Gurtabschnitte 7, 17 im Wesentlichen senkrecht aufeinander stehen. Dadurch ist eine optimal angepasste Führung des Gurtes an die Sitzposition des Kindes gegeben.

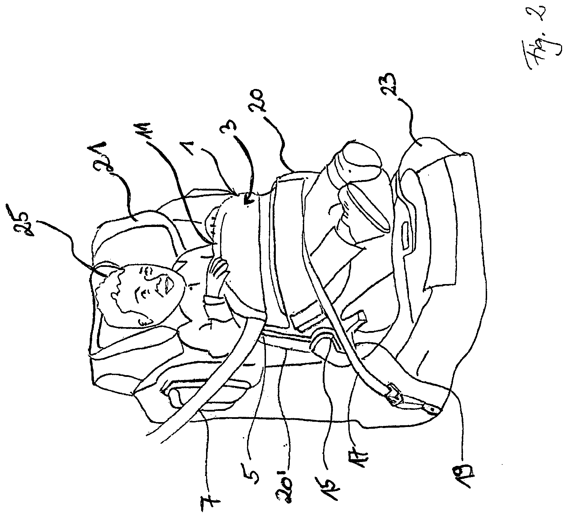

Fig. 2 zeigt noch eine perspektivische schematische Darstellung des Fangelements 1 in einem Benutzungszustand. In dem in Fig. 2 gezeigten Beispiel wirkt das Fangelement 1 mit einem Kindersitz 21 zusammen, der auf einem Autositz 23 eines Fahrzeugs, insbesondere eines Kraftfahrzeuges, positioniert ist. Ferner wirkt das Fangelement 1 mit einem herkömmlichen 3-Punkt-Gurtsystem eines Fahrzeugs zusammen, welches den Diagonal-Gurtabschnitt 7 (Brust-Gurtabschnitt) und den Horizontal-Gurtabschnitt 17 (Becken-Gurtabschnitt) umfasst.

Das Fangelement 1 kann auf dem Kindersitz 21 aufgesetzt und mittels des Gurtsystems daran befestigt werden. Mittels des Gurtsystems kann auch der Kindersitz 21 an dem Autositz 23 befestigt werden. Alternativ kann jedoch auch vorgesehen sein, dass das Fangelement 1 verstellbar an dem Kindersitz 21 befestigt ist. Insbesondere kann das Fangelement 1 bzw. der Kindersitz 21 über entsprechende Verbindungselemente, beispielsweise Rastelemente, verfügen, die eine Einstellbarkeit des Fangelements 1, insbesondere in der horizontalen und/oder in der vertikalen Richtung, erlauben. Auf diese Weise kann das Fangelement 1 an unterschiedlich große Kinder angepasst werden.

Fig. 2 macht noch deutlich, dass zur Befestigung des Fangelements 1 der Diagonal-Gurtabschnitt 7 durch die erste Gurtführung 5 geführt wird, während der Horizontal-Gurtabschnitt 17 durch die zweite Gurtführung 15 geführt wird. Dadurch, dass sich die zweite Gurtführung 15 zur Aufnahme des Horizontal-Gurtabschnitts 17 im Bereich der Unterseite 13 des Fangelements 1 und damit in der Nähe der Sitzfläche befindet, kann der Horizontal-Gurtabschnitt 17 so positioniert werden, dass er im Benutzungszustand des Fangelements 1 unmittelbar mit dem Kind 25 in Kontakt steht und insbesondere auf dessen Oberschenkeln aufliegt.

Die beiden Gurtführungen 5, 15 sind in einem geeigneten vertikalen Abstand zueinander angeordnet. Insbesondere ist die erste Gurtführung 5 vorteilhafterweise in der Nähe der Oberseite 11 des Fangelements 1 angeordnet, während die zweite Gurtführung der Unterseite 13 des Fangelements 1 zugeordnet ist.

Dadurch, dass die zweite Gurtführung 15 in dem gezeigten Ausführungsbeispiel der Erfindung zwei voneinander getrennte Führungsabschnitte 19 aufweist, die jeweils auf beiden Seiten 20, 20' des Fangelements 1 sich gegenüberliegend angeordnet sind, erstreckt sich der Horizontal-Gurtabschnitt 17 im Benutzungszustand im Wesentlichen frei zwischen den beiden Führungsabschnitten 19, so dass der Horizontal-Gurtabschnitt 17 auf den Oberschenkeln des Kindes 25 aufliegen kann.

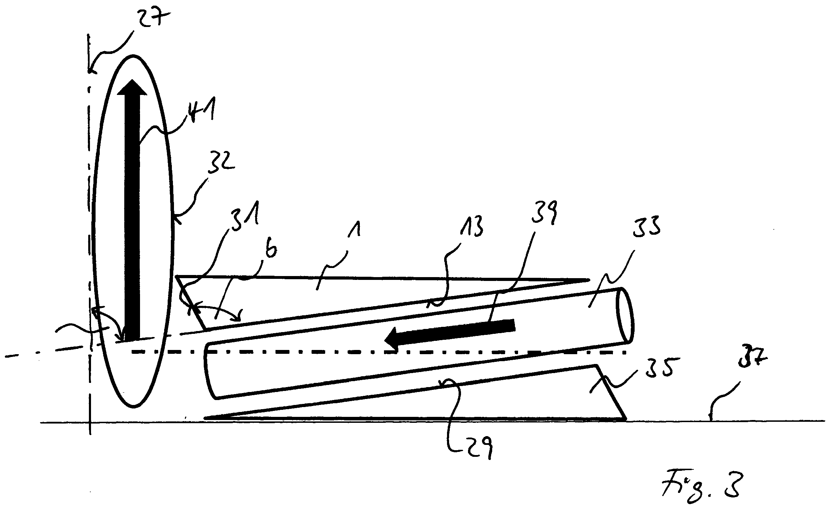

Die Fig. 3 zeigt noch eine vorteilhafte Weiterbildung der Erfindung, die zu einer erhöhten Sicherheit für das Kind beiträgt. Bei der gezeigten Ausführungsform schließt die Unterseite 13 des Fangelements 1 in seinem Benutzungszustand einen spitzen Winkel a mit einer dem Fangelement 1 zugeordneten Rückenstützfläche 27 bzw. einer Brustfläche 32 des Kindes ein. Der Winkel a kann insbesondere zwischen 60° und 85° betragen, insbesondere zwischen 70° und 85°. Bei der Rückenstützfläche 27 kann es sich insbesondere um die Rückenlehne eines Fahrzeugsitzes oder um die Rückenlehne eines Kindersitzes handeln.

Die Figur macht noch deutlich, dass der Winkel a im montierten Zustand des Fangelements 1 etwa der Neigung einer dem Fangelement 1 zugeordneten Sitzfläche 29 entspricht. Die Sitzfläche 29 schließt also mit der zugeordneten Rückenstützfläche 27 vorzugsweise ebenfalls einen spitzen Winkel a ein. Die Sitzfläche 29 und die Unterseite 13 des Fangelements 1 sind in dieser Ausführungsform im Benutzungszustand des Fangelements 1 im Wesentlichen parallel zueinander ausgerichtet und die Oberschenkel 33 des Kindes sind dazwischenliegend angeordnet.

Weiterhin kann eine Bruststützfläche 31 an der Rückseite 9 des Fangelements 1 des Kindes mit der Unterseite 13 des Fangelements 1 einen stumpfen Winkel b > 90° einschließen, sodass die Bruststützfläche 31 im Benutzungszustand des Fangelements 1 zur Brustfläche 32 des Kindes 25 hin geneigt ist. Je nach Größe des Kindes kann der keilförmige Sitz 35 darüber hinaus kürzer oder länger ausgebildet und folglich an die Länge der Oberschenkel 33 des Kindes angepasst sein. Auch die Winkel a und b, d.h. die Neigung der Sitzfläche 29 und des Fangelements 1 können in Abhängigkeit der Größe des Kindes variieren.

Anders als bei herkömmlichen Kindersicherungseinrichtungen für Fahrzeuge, bei denen die Sitzeinheit 35 und der Fangkörper 1 parallel zum Boden 37 ausgerichtet sind, ist die Sitzeinheit 35 und der Fangkörper 1 bzw. die Sitzfläche 29 und die Unterseite 13 erfindungsgemäß in Richtung des Kindes hin geneigt. Dadurch wird der "Schlupfkanal" zwischen der Sitzeinheit 35 und dem Fangkörper 1 enger, da die Kniekehlen des Kindes höher liegen als das gegenüberliegende Ende der Oberschenkel 33 und der zum Körper gewandte Teil des Fangkörpers 1 tiefer liegt als der dem Körper des Kindes abgewandte Teil. Auf diese Weise kann ein Kind im Falle eines Fahrzeugüberschlags nur mit einem erhöhten Kraftaufwand aus dem Sitz gezogen werden, wie durch die Pfeile 39 und 41 angedeutet ist.

Durch die vorliegende Erfindung wird in vorteilhafter Weise gewährleistet, dass im Falle eines Unfalls und einer resultierenden Kraftausübung auf den Oberkörper des Kindes 25, der Horizontal-Gurtabschnitt 17 gespannt wird und damit eine direkte Fixierung des Kindes an dem Kindersitz 21 bzw. an dem Autositz 23 bewirkt wird. Das Fangelement 1 gemäß der vorliegenden Erfindung sorgt somit für ein deutlich minimiertes Verletzungsrisiko für ein Kind im Falle eines Unfalls.

### Bezugszeichenl iste

- 1: Fangelement
- 3: Vorderseite
- 5: Erste Gurtführung
- 7: Diagonal-Gurtabschnitt
- 9: Rückseite
- 11: Oberseite
- 13: Unterseite
- 15: Zweite Gurtführung
- 17: Horizontal-Gurtabschnitt
- 19: Führungsabschnitt
- 20: Seitenfläche
- 21: Kindersitz
- 23: Autositz
- 25: Kind
- 27: Rückenstützfläche
- 29: Sitzfläche
- 31: Bruststützfläche
- 32: Brustfläche
- 33: Oberschenkel
- 35: Sitz(-einheit)
- 37: Boden
- 39: Pfeil
- 41: Pfeil
- α: spitzer Winkel
- β: stumpfer Winkel

## Patentansprüche

1. Fangelement (1) zum Halten eines Kindes (25) mit einem einen Diagonal-Gurtabschnitt (7) und einen Horizontal-Gurtabschnitt (17) umfassendes Gurtsystem eines Fahrzeugs, insbesondere zur Verwendung mit einem Kindersitz (21), wobei das Fangelement (1) derart konfiguriert ist, dass es sich in einem Benutzungszustand etwa quer oberhalb der Oberschenkel eines auf einer Sitzfläche (29) sitzenden Kindes (25) erstreckt,
**dadurch gekennzeichnet, dass**
das Fangelement (1) eine erste Gurtführung (5) für den Diagonal-Gurtabschnitt (7) und eine zweite Gurtführung (15) aufweist, wobei die zweite Gurtführung (15) konfiguriert ist, derart mit dem Horizontal-Gurtabschnitt (17) zusammenzuwirken, dass sich der Horizontal-Gurtabschnitt (17) in dem Benutzungszustand des Fangelements (1) unmittelbar über die Oberschenkel des Kindes (25) hinweg erstreckt.

2. Fangelement nach Anspruch 1,
**dadurch gekennzeichnet, dass**
die zweite Gurtführung (15) an dem Fangelement (1) oder an einem Sitz, insbesondere an einem mit dem Fangelement (1) zusammenwirkenden Kindersitz, angeordnet ist.

3. Fangelement nach Anspruch 1 oder 2,
**dadurch gekennzeichnet, dass**
die erste und/oder die zweite Gurtführung (5, 15) als schlitzartige Öffnung ausgebildet ist.

4. Fangelement nach einem der vorhergehenden Ansprüche,
**dadurch gekennzeichnet, dass**
die erste Gurtführung (5) an der Vorderseite (3) des Fangelements (1) angeordnet ist.

5. Fangelement nach einem der vorhergehenden Ansprüche,
**dadurch gekennzeichnet, dass**
die zweite Gurtführung (15) zwei jeweils zu beiden Seiten (20, 20') des Fangelements (1) angeordnete Führungsabschnitte (19) umfasst, zwischen denen der Horizontal-Gurtabschnitt (17) frei führbar ist.

6. Fangelement nach einem der vorhergehenden Ansprüche,
**dadurch gekennzeichnet, dass**
die zweite Gurtführung (15) bzw. deren Führungsabschnitte (19) in einem Abstand zu der ersten Gurtführung (5) an einer Unterseite (13) des Fangelements (1) angeordnet ist.

7. Fangelement nach einem der vorhergehenden Ansprüche,
**dadurch gekennzeichnet, dass**
die erste Gurtführung (5) und die zweite Gurtführung (15) eine im Wesentlichen senkrecht zueinander ausgerichtete Führung des Diagonal-Gurtabschnitts (7) und des Horizontal-Gurtabschnitts (17) bewirken.

8. Fangelement nach einem der vorhergehenden Ansprüche,
**dadurch gekennzeichnet, dass**
die (schlitzartige) zweite Gurtführung (15) im Benutzungszustand des Fangelements (1) im Wesentlichen parallel zu den Oberschenkeln des Kindes (25) ausgerichtet ist.

9. Fangelement nach einem der vorhergehenden Ansprüche,
**dadurch gekennzeichnet, dass**
die (schlitzartige) zweite Gurtführung (15) zur Vorderseite (3) des Fangelements (1) hin offen ist.

10. Fangelement nach einem der vorhergehenden Ansprüche,
**dadurch gekennzeichnet, dass**
die (schlitzartige) erste Gurtführung (5) im Benutzungszustand des Fangelements (1) im Wesentlichen parallel zu der Brust des Kindes (25) ausgerichtet ist.

11. Fangelement nach einem der vorhergehenden Ansprüche,
**dadurch gekennzeichnet, dass**
die erste Gurtführung (5) zwischen den beiden Seitenflächen (20, 20') des Fangelements (1) einen im Wesentlichen bogenförmigen Verlauf aufweist.

12. Fangelement nach einem der vorhergehenden Ansprüche,
**dadurch gekennzeichnet, dass**
das Fangelement (1) relativ zu der Sitzfläche verstellbar lagerbar ist, insbesondere in einem von hinten nach vorne ansteigenden Winkel.

13. Fangelement nach einem der vorhergehenden Ansprüche,
**dadurch gekennzeichnet, dass**
das Fangelement (1) stufenlos, oder alternativ stufenweise verstellbar ist.

14. Fangelement nach einem der vorhergehenden Ansprüche,
**dadurch gekennzeichnet, dass**
das Fangelement (1) ein der Brust eines Kindes (25) zugewandtes Polster umfasst, welches einen Brustauflagebereich definiert.

15. Fangelement nach einem der vorhergehenden Ansprüche,
**dadurch gekennzeichnet, dass**
das Fangelement (1) einen Hohlkörper mit etwa U-förmigem Querschnitt umfasst, der in montierter Stellung in Richtung nach vorne hin offen ist und die schlitzartige erste Gurtführung (5) definiert.

16. Fangelement nach einem der vorhergehenden Ansprüche,
**dadurch gekennzeichnet, dass**
die Unterseite (13) des Fangelements (1) derart konfiguriert ist, dass ein spitzer Winkel (a) mit einer dem Fangelement (1) zugeordneten Rückenstützfläche (27) ausbildbar ist, insbesondere ein Winkel (a) von 50° bis 90°, vorzugsweise ein Winkel von 70° bis 85°.

17. Fangelement nach Anspruch 16,
**dadurch gekennzeichnet, dass**
der Winkel (a) im montierten Zustand des Fangelements (1) etwa der Neigung einer dem Fangelement (1) zugeordneten Sitzfläche (29) entspricht.

## Claims

1. A restraining element (1) for holding a child (25), having a vehicle seat belt system comprising a diagonal belt section (7) and a horizontal belt section (17), in particular for use with a child seat (21), wherein the restraining element (1) is configured in such a way that in a use state, it extends roughly transversely above the thighs of a child (25) sitting on a seat surface (29),
**characterized in that**
the restraining element (1) has a first belt guide (5) for the diagonal belt section (7) and a second belt guide (15), wherein the second belt guide (15) is configured to interact with the horizontal belt section (17) in such a way that, in the use state of the restraining element (1), the horizontal belt section (17) extends directly across the thigh of the child (25).

2. The restraining element according to claim 1,
**characterized in that**
the second belt guide (15) is arranged on the restraining element (1) or on a seat, in particular on a child seat interacting with the restraining element (1).

3. The restraining element according to claim 1 or 2,
**characterized in that**
the first and/or the second belt guide (5, 15) is/are configured as a slit-like opening/slit-like openings.

4. The restraining element according to any one of the preceding claims,
**characterized in that**
the first belt guide (5) is arranged on the front side (3) of the restraining element (1).

5. The restraining element according to any one of the preceding claims,
**characterized in that**
the second belt guide (15) comprises two guide sections (19) arranged on both sides (20, 20'), respectively, of the restraining element (1), between which guide sections the horizontal belt section (17) can be freely guided.

6. The restraining element according to any one of the preceding claims,
**characterized in that**
the second belt guide (15) or the guide sections (19) thereof is/are arranged on an underside (13) of the restraining element (1) at a distance from the first guide section (5).

7. The restraining element according to any one of the preceding claims,
**characterized in that**
the first belt guide (5) and the second belt guide (15) effect a guiding of the diagonal belt section (7) and of the horizontal belt section (17) in directions essentially perpendicularly to one another.

8. The restraining element according to any one of the preceding claims,
**characterized in that**
in the use state of the restraining element (1), the (slit-like) second belt guide (15) is aligned essentially parallel to the thighs of the child (25).

9. The restraining element according to any one of the preceding claims,
**characterized in that**
the (slit-like) second belt guide (15) is open toward the front side (3) of the restraining element (1).

10. The restraining element according to any one of the preceding claims,
**characterized in that**
in the use state of the restraining element (1), the (slit-like) first belt guide (5) is aligned essentially parallel to the chest of the child (25).

11. The restraining element according to any one of the preceding claims,
**characterized in that**
the first belt guide (5) has an essentially arcuate contour between the two lateral surfaces (20, 20') of the restraining element (1).

12. The restraining element according to any one of the preceding claims,
**characterized in that**
the restraining element (1) can be mounted adjustably relative to the seat surface, in particular in an angle that increases from bank to front.

13. The restraining element according to any one of the preceding claims,
**characterized in that**
the restraining element (1) can be adjusted continuously, or in stages as an alternative.

14. The restraining element according to any one of the preceding claims,
**characterized in that**
the restraining element (1) comprises a pad facing the chest of a child (25) and defining a chest support surface.

15. The restraining element according to any one of the preceding claims,
**characterized in that**
the restraining element (1) comprises a hollow body having a roughly U-shaped cross section, which in the installed state is open toward the front and which defines the slit-like first belt guide (5).

16. The restraining element according to any one of the preceding claims,
**characterized in that**
the underside (13) of the restraining element (1) is configured in such a way that an acute angle (a), in particular a 50° to 90° angle (a), preferably a 70° to 85° angle, can be formed with a backrest surface (27) associated with the restraining element (1).

17. The restraining element according to claim 16,
**characterized in that**
in the installed state of the restraining element (1), the angle (a) roughly corresponds to the inclination of a seat surface (29) associated with the restraining element (1).

## Revendications

1. Élément preneur (1), destiné à retenir un enfant (25), pourvu d'un système de ceinture d'un véhicule comprenant un segment de ceinture diagonal (7) et un segment de ceinture horizontal (17), notamment voué à l'utilisation avec un siège enfant (21), l'élément preneur (1) étant configuré de telle sorte que dans une position d'utilisation, il s'étende approximativement à la transversale au-dessus de la cuisse d'un enfant (25) assis sur une surface d'assise (29),
**caractérisé en ce que**
l'élément preneur (1) comporte un premier guidage de ceinture (5) pour le segment de ceinture diagonal (7) et un deuxième guidage de ceinture (15), le deuxième guidage de ceinture (15) étant configuré pour coopérer avec le segment de ceinture horizontal (17), de telle sorte que dans la position d'utilisation de l'élément preneur (1), le segment de ceinture horizontal (17) s'étende au-delà de la cuisse de l'enfant (25).

2. Élément preneur selon la revendication 1,
**caractérisé en ce que**
le deuxième guidage de ceinture (15) est placé sur l'élément preneur (1) ou sur un siège, notamment sur un siège enfant coopérant avec l'élément preneur (1).

3. Élément preneur selon la revendication 1 ou 2,
**caractérisé en ce que**
le premier et/ou le deuxième guidage de ceinture (5, 15) est conçu sous la forme d'une ouverture en forme de fente.

4. Élément preneur selon l'une quelconque des revendications précédentes,
**caractérisé en ce que**
le premier guidage de ceinture (5) est placé sur la face avant (3) de l'élément preneur (1).

5. Élément preneur selon l'une quelconque des revendications précédentes,
**caractérisé en ce que**
le deuxième guidage de ceinture (15) comprend deux segments de guidage (19) respectivement placés des deux côtés (20, 20') de l'élément preneur (1), entre lesquels le segment de ceinture horizontal (17) peut être guidé librement.

6. Élément preneur selon l'une quelconque des revendications précédentes,
**caractérisé en ce que**
le deuxième guidage de ceinture (15) ou ses segments de guidage (19) sont placés avec un écart par rapport au premier guidage de ceinture (5) sur une face inférieure (13) de l'élément preneur (1).

7. Élément preneur selon l'une quelconque des revendications précédentes,
**caractérisé en ce que**
le premier guidage de ceinture (5) et le deuxième guidage de ceinture (15) provoquent un guidage orienté sensiblement à la perpendiculaire réciproque du segment de ceinture diagonal (7) et du segment de ceinture horizontal (17).

8. Élément preneur selon l'une quelconque des revendications précédentes,
**caractérisé en ce que**
dans la position d'utilisation de l'élément preneur (1), le deuxième guidage de ceinture (15) (en forme de fente) est orienté sensiblement à la parallèle des cuisses de l'enfant (25).

9. Élément preneur selon l'une quelconque des revendications précédentes,
**caractérisé en ce que**
le deuxième guidage de ceinture (15) (en forme de fente) est ouvert vers la face avant (3) de l'élément preneur (1).

10. Élément preneur selon l'une quelconque des revendications précédentes,
**caractérisé en ce que**
dans la position d'utilisation de l'élément preneur (1), le premier guidage de ceinture (5) (en forme de fente) est orienté sensiblement à la parallèle de la poitrine de l'enfant (25).

11. Élément preneur selon l'une quelconque des revendications précédentes,
**caractérisé en ce**
**qu'**entre les deux surfaces latérales (20, 20') de l'élément preneur (1), le premier guidage de ceinture (5) présent un trajet sensiblement curviligne.

12. Élément preneur selon l'une quelconque des revendications précédentes,
**caractérisé en ce que**
l'élément preneur (1) est susceptible d'être logé de manière réglable par rapport à l'assise, notamment sous un angle croissant de l'arrière vers l'avant.

13. Élément preneur selon l'une quelconque des revendications précédentes,
**caractérisé en ce que**
l'élément preneur (1) est réglable en continu ou en variante graduellement.

14. Élément preneur selon l'une quelconque des revendications précédentes,
**caractérisé en ce que**
l'élément preneur (1) comprend un rembourrage qui fait face à la poitrine d'un enfant (25) lequel définit une zone d'appui sur la poitrine.

15. Élément preneur selon l'une quelconque des revendications précédentes,
**caractérisé en ce que**
l'élément preneur (1) comprend un corps creux de section transversale approximativement en forme de U, qui en position montée est ouvert dans la direction vers l'avant et qui définit le premier guidage de ceinture (5) en forme de fente.

16. Élément preneur selon l'une quelconque des revendications précédentes,
**caractérisé en ce que**
la face inférieure (13) de l'élément preneur (1) est configurée de telle sorte qu'un angle aigu (a) puisse être formé avec une surface de soutien dorsal (27) associée à l'élément preneur (1), notamment un angle (a) de 50° à 90°, de préférence un angle de 70° à 85°.

17. Élément preneur selon la revendication 16,
**caractérisé en ce que**
dans la position montée de l'élément preneur (1), l'angle (a) correspond approximativement à l'inclinaison d'une surface d'assise (29) associée à l'élément preneur (1).
